(19) Europäisches Patentamt
European Patent Office
Office européen des brevets

(11) **EP 4 198 971 A1**

(12) **DEMANDE DE BREVET EUROPEEN**

(43) Date de publication:
**21.06.2023 Bulletin 2023/25**

(21) Numéro de dépôt: **22213655.8**

(22) Date de dépôt: **14.12.2022**

(51) Classification Internationale des Brevets (IPC):
**G10L 17/26** [(2013.01)]    **G10L 25/63** [(2013.01)]

(52) Classification Coopérative des Brevets (CPC):
**G10L 17/26; G10L 25/63**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **15.12.2021 FR 2113579**
**04.04.2022 FR 2203066**

(71) Demandeur: **Voxymore**
**72000 Le Mans (FR)**

(72) Inventeur: **GABAL, Ahmed**
**78100 35 Rue Franklin Saint-Germain en Laye (FR)**

(74) Mandataire: **Benezeth, Philippe J.L.M.**
**Cabinet Innov'cean**
**9, rue de Fourcroy**
**44000 Nantes (FR)**

(54) **METHOD FOR SELECTING VOICE CONTENTS RECORDED IN A DATABASE, ACCORDING TO THEIR VERACITY FACTOR**

(57)    L'invention concerne un procédé de sélection d'au moins un segment de données représentant des contenus vocaux enregistrés dans une base de données, chaque segment étant associé à un facteur de véracité calculé à partir des éléments de langage détectés dans les intonations du contenu vocal du segment, ledit facteur étant représentatif de l'état émotionnel du locuteur lors de la locution du contenu, ledit procédé étant caractérisé en ce qu'il comporte une étape de sélection d'au moins un segment de données, l'au moins un segment sélectionné possédant un niveau de véracité dont la valeur est supérieure à un seuil déterminé.

Fig. 2

**Description**

**1. DOMAINE DE L'INVENTION**

L'invention concerne un procédé de sélection de segments de données numériques représentant des contenus vocaux enregistrés dans une base de données. L'invention concerne plus particulièrement le fait que les segments sont associés à un facteur de véracité calculé à partir des éléments de langage détectés dans les intonations du contenu vocal et que les segments sélectionnés ont un niveau de véracité supérieur à un seuil déterminé.

**2. ARRIÈRE-PLAN TECHNOLOGIQUE**

Le domaine de l'invention est celui de l'analyse de contenus audio vocaux pour en déterminer un contenu sémantique comprenant les mots, les phrases, les expressions, les éléments de langage et autres informations liées aux intonations et la façon de s'exprimer d'un locuteur. Le but est de fournir un état du locuteur qui vient compléter le contenu informationnel de ses propos, par exemple son émotion au moment où il s'exprime, ou son niveau de franchise.

Pour contrôler qu'une personne dit bien la vérité, il est connu des sérums de vérité qui sont des éléments chimiques modifiant le comportement des personnes chez qui ces éléments sont inoculés. Dans cet état, les personnes ne retiennent pas leurs propos et répondent avec une grande franchise à leur interrogateur. Ces produits sont utilisés par la police de certains pays, avec l'accord de la personne interrogée pour prouver son innocence ou sa culpabilité vis-à-vis de certains faits. Cette mesure est évidemment très contraignante et ne peut en aucun cas s'appliquer quotidiennement. D'autres méthodes consistent à appliquer des électrodes sur la tête d'une personne soumise à un interrogatoire et à analyser l'activité électrique de certaines zones du cerveau. Selon les stimulus électriques détectés, il est possible de déterminer avec un certain taux de réussite le niveau de véracité des propos de la personne soumise à ce test. Cette méthode est moins contraignante que la première car il n'y a pas inoculation de produits chimiques, mais elle est très complexe car elle nécessite toute une installation électrique. Avec le temps, ces deux méthodes se sont finalement révélées peu fiables et sources d'erreurs, notamment judiciaires.

Il existe des circonstances où il est utile de déterminer si un locuteur ment ou dit la vérité. C'est notamment le cas lorsqu'une personne demande un prêt à un banquier et désire des informations sur le contrat. Il peut être souhaitable pour le banquier de déterminer si cette personne a bien l'intention de le rembourser une fois que ce prêt sera consenti. Cette situation est relatée dans la demande de brevet américain US2015142446 déposée le 21 Novembre 2014, par GLOBAL ANALYTICS Inc. Ce document décrit un modèle prédictif pour la détection d'émotions dans les propos d'un demandeur au cours d'une conversation avec son banquier, le demandeur répondant à un questionnaire concernant sa demande de prêt. Pour déterminer le sérieux de cette démarche, le banquier a besoin de connaître le risque et la possibilité d'une fraude intentionnelle du demandeur. Le modèle prédictif analysant la voix du demandeur fournit une indication sur le fait qu'il a bien l'intention de rembourser le prêt ou s'il ment. Bien évidemment, le banquier prend aussi des informations factuelles pour évaluer la capacité du demandeur à rembourser le prêt, le modèle prédictif étant une aide à la décision de lui octroyer ou non ce prêt. Les éléments de langages utilisés pour la détermination de l'intention de réaliser un engagement sont analysés par des modèles tels que : la classification de Naive-Bayes, la méthode de Maxent, les modèles log-linéaires, le perceptron moyen, la SVM, le clustering hiérarchique...

Cette méthode utilise un ordinateur qui analyse en temps réel la voix du demandeur, et qui fournit immédiatement une information sur un écran représentatif signalant un comportement frauduleux que le demandeur veut cacher dans ces propos. De cette manière, le banquier peut immédiatement prendre une décision d'octroyer ou non le prêt.

D'autres méthodes pour détecter des sentiments ou des émotions existent. Elles peuvent notamment être utilisées pour déterminer le niveau d'énervement ou d'intérêt d'un interlocuteur téléphonique. Ce type d'application est notamment utile lorsqu'une entreprise fait de la prospection pour proposer des produits ou des services par téléphone. Cette analyse en temps réel de la parole permet à la personne appelante de connaître l'intérêt de son interlocuteur pour les produits proposés en regardant un écran sur lequel s'affichent des informations obtenues par l'analyse des propos du locuteur. Au fil de la discussion et en voyant les informations affichées, la personne appelante peut ainsi prolonger la discussion, l'orienter différemment ou l'écourter.

Les modèles de détection d'émotions se basent généralement sur l'analyse de la prosodie et notamment sur la présence de bégaiements, de répétitions de mots, de baisse du niveau sonore, qui sont révélateurs d'un manque d'assurance du locuteur. Toutes ces applications analysent en temps réel la prosodie d'un locuteur pour fournir à un utilisateur une information représentative d'une émotion ou d'un sentiment. Ces applications ne sont pas conçues pour explorer de grandes quantités de documents vocaux pour en extraire certaines caractéristiques. En effet, dans certaines circonstances, il est utile de naviguer sur des documents vocaux enregistrés préalablement afin d'en extraire des caractéristiques liées aux sentiments, émotions et comportement du locuteur, et ceci indépendamment du contenu sémantique exprimé.

## 3. OBJECTIFS DE L'INVENTION

La présente invention a donc pour but, en évitant ces inconvénients, de fournir une méthode permettant d'analyser des contenus vocaux enregistrés dans une base de données, de sélectionner un certain nombre de ces contenus sur la base d'émotions ou de sentiments exprimés par le locuteur, et de présenter ces contenus à des fins applicatives.

## 4. PRESENTATION DE L'INVENTION

A cet effet, l'invention concerne un procédé de sélection d'au moins un segment de données textuelles représentant des contenus vocaux enregistrés dans une base de données, comprenant les étapes ci-après mises en œuvre sur un ordinateur :

- une étape de détermination d'une valeur appelée « facteur de véracité » associée à chaque segment et calculée à partir de la présence ou de l'absence d'éléments de langage détectés dans le contenu vocal du segment, ledit facteur étant représentatif de l'état émotionnel du locuteur lors de la locution du contenu vocal,
- une étape de sélection d'au moins un segment de données, l'au moins un segment sélectionné possédant un facteur de véracité dont la valeur est supérieure à un seuil déterminé.

De cette manière, le procédé sélectionne les segments les plus pertinents selon leur facteur de véracité, afin de les traiter dans une application qui permet de les présenter ou de les reproduire à l'intention d'un utilisateur.

Selon un premier mode de réalisation, le facteur de véracité dépend d'un paramètre calculé par un modèle prédictif de régression sur la valence émotionnelle et la valeur de l'excitation détectée dans le contenu vocal. De cette manière, la pertinence du facteur de véracité est meilleure.

Selon un autre mode de réalisation, le facteur de véracité est calculé en fonction de la présence ou de l'absence dans le segment vocal d'un ou plusieurs éléments de langage pris dans l'ensemble suivant : expressions de langage présentes dans un tableau enregistré en mémoire, bégaiements ou répétition, pauses de réflexion ou hésitation.

Selon un autre mode de réalisation, ledit facteur de véracité dépend d'un paramètre calculé par un modèle prédictif de régression sur la valence émotionnelle et la valeur de l'excitation détectée dans le contenu vocal. De cette manière, la qualité pour évaluer la véracité de propos du locuteur est améliorée

Selon un autre mode de réalisation, ledit facteur de véracité dépend de la présence d'au moins une expression textuelle extraite d'un tableau de données enregistré en mémoire associant des expressions de langage et des valeurs prédéterminés, ledit paramètre étant calculé à partir des valeurs associées aux expressions détectés dans le contenu vocal. De cette manière, la pertinence du facteur de véracité est meilleure.

Selon un autre mode de réalisation, ledit facteur de véracité dépend de la présence de bégaiements détectés de façon épisodique dans le contenu vocal. De cette manière, la pertinence du facteur de véracité est meilleure

Selon un autre mode de réalisation, le facteur de véracité dépend de la présence dans le contenu vocal de pauses de réflexion, déterminées par un modèle utilisant une application de détection de parole ( « Voice Activity Détection » en langue anglo-saxonne).. De cette manière, la pertinence du facteur de véracité est meilleure. Selon un autre mode de réalisation, le facteur de véracité est calculé sur la base d'au moins deux éléments de langage dont l'importance pour la détermination du facteur de véracité est définie par un coefficient déterminé. De cette manière, la détermination du facteur de véracité est plus précise.

Selon un autre mode de réalisation, lesdits segments de données sont associés à des informations représentatives de mots détectés dans le contenu vocal de chaque segment, le procédé comportant une étape préalable d'introduction de mots clefs et une étape de recherche des mots clefs introduits dans les informations associés aux segments enregistrés, la sélection d'au moins un segment s'effectuant parmi les segments dont les informations associées comportent au moins un mot clef introduit. De cette manière, la pertinence du facteur de véracité est meilleure.

Selon un autre mode de réalisation, le procédé de sélection comporte une étape d'affichage d'au moins un texte présent dans le contenu vocal et de la valeur du facteur de véracité associé à ce texte. De cette manière, l'utilisateur peut très vite se rendre compte du facteur de véracité associé aux propos affichés sur un écran. Selon un autre mode de réalisation, le procédé de sélection comporte une étape d'affichage d'un texte présent dans le contenu vocal et une étape de mise en évidence graphique des éléments de ce texte représentatifs des éléments de langage qui sont utilisés pour la détermination du facteur de véracité associé à ce texte. De cette manière, l'utilisateur voit sur l'écran les critères qui ont permis au procédé de calculer le facteur de véracité.

Selon un autre aspect, l'invention concerne un procédé de sélection d'au moins un segment de donnée dans lequel des segments de données contiennent les mots détectés dans le contenu vocal de chaque segment, le procédé comportant une étape préalable d'introduction d'au moins un mot clef et une étape de recherche des mots clefs introduits dans les segments enregistrés, l'étape de sélection d'au moins un segment s'effectuant parmi les segments comportant au moins un mot clef introduit, le procédé comportant en outre une étape de reproduction des contenus vocaux sélectionnés lors de l'étape de sélection.

Selon un autre mode de réalisation, le procédé comporte une étape d'affichage d'au moins un texte présent dans le contenu vocal associé aux segments sélectionnés et de la valeur du facteur de véracité associé à ce texte.

Selon un autre aspect, l'invention concerne un procédé d'affichage d'un texte présent dans un contenu vocal composé d'une pluralité de segments de donnée et enregistré dans une mémoire, ledit procédé comportant les étapes ci-après mises en œuvre sur un ordinateur : une étape d'analyse d'un document vocal pour le décomposer en segments de donnée textuelles associés chacun à un contenu vocal, une étape de détermination d'une valeur appelée « facteur de véracité » associée à chaque segment et calculée à partir de la présence ou de l'absence d'éléments de langage détectés dans le contenu vocal du segment, ledit facteur étant représentatif de l'état émotionnel du locuteur lors de la locution du contenu vocal, une étape d'affichage d'un texte présent dans le contenu vocal et une étape de mise en évidence graphique des éléments de ce texte représentatifs des éléments de langage qui sont utilisés pour la détermination du facteur de véracité associé à ce texte.

Selon un autre mode de réalisation, le procédé comporte une étape de détermination des différents locuteurs s'exprimant dans le contenu vocal, et une étape d'introduction d'un identifiant de locuteur, les textes du locuteur sélectionné étant pris en compte dans l'étape d'affichage.

Selon un autre aspect, l'invention concerne un procédé de création d'un résumé d'un document vocal composé d'une pluralité de segments de donnée et enregistré dans une mémoire, ledit procédé comportant une étape d'analyse dudit document vocal en vue de le décomposer en segments de donnée associé chacun à un contenu vocal, une étape selon le procédé de sélection défini plus haut pour sélectionner un ensemble de segments dont le facteur de véracité a une valeur supérieure à un seuil déterminé, une étape de constitution dudit résumé à partir des segments sélectionné mis chronologiquement bout à bout et, une étape d'introduction d'une commande sur ledit ordinateur pour reproduire le résumé ainsi constitué.

## 5.DESCRIPTION DES FIGURES

D'autres caractéristiques et avantages de l'invention apparaîtront à la lecture de la description suivante, donnée à titre d'exemple indicatif et non limitatif, et des dessins annexés, dans lesquels :

[Fig. 1] : la figure 1 décrit les principaux équipements d'un serveur conçu pour la mise en œuvre de l'invention, selon un exemple préféré de réalisation,
[Fig. 2] : la figure 2 décrit un ordinogramme des principales étapes du procédé selon un exemple préféré de réalisation,
[Fig. 3] : la figure 3 décrit un ordinogramme illustrant une première application utilisant le procédé d'analyse de la parole d'un locuteur,
[Fig. 4] : la figure 4 représente un schéma d'une apparence d'écran servant d'interface pour une première application utilisant le procédé,
[Fig. 5] : la figure 5 décrit un ordinogramme illustrant une seconde application utilisant le procédé d'analyse de la parole d'un locuteur.

## 6.DESCRIPTION DETAILLEE D'UN MODE DE REALISATION

### 6.1 Principe général

L'invention concerne un procédé de sélection d'au moins un segment de données représentant des contenus vocaux enregistrés dans une base de données, chaque segment étant associé à un facteur de véracité calculé à partir des éléments de langage détectés dans les intonations du contenu vocal du segment, ledit facteur étant représentatif de l'état émotionnel du locuteur lors de la locution du contenu, ledit procédé comporte en outre une étape de sélection d'au moins un segment de données, l'au moins un segment sélectionné possédant un niveau de véracité dont la valeur est supérieure à un seuil déterminé.

### 6.2. Mode préféré de réalisation

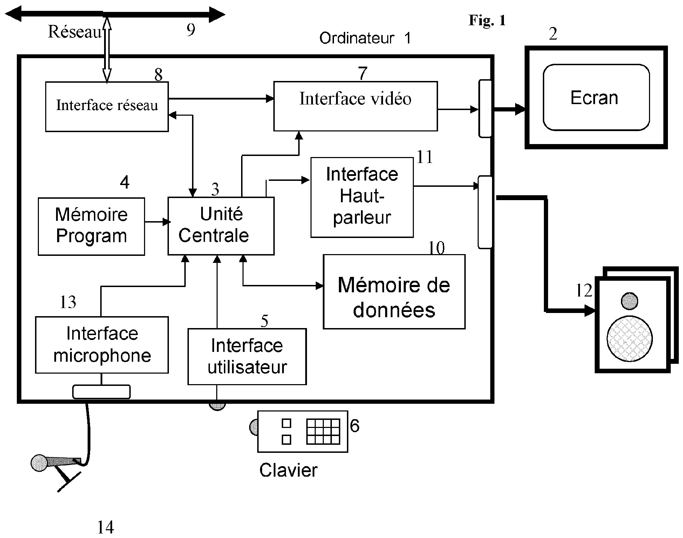

La Fig. 1 décrit un exemple de réalisation d'un système d'enregistrement de documents vocaux. Ce système présente un ordinateur 1 connecté à un dispositif d'affichage 2 tel qu'un écran de visualisation. L'écran est notamment destiné à afficher des menus de configuration, des identifiants de documents enregistrés dans l'appareil, et des informations fournies par l'analyse du contenu vocal. L'ordinateur 1 est doté d'une unité centrale 3 reliée notamment à une mémoire 4 contenant des programmes exécutables, une interface de réception de signaux infrarouges 5 pour recevoir des signaux d'un clavier ou d'une télécommande 6, une interface vidéo 7 pour la création de signaux visuels envoyés au dispositif d'affichage 2. L'interface vidéo 7 dispose d'un circuit de génération de texte et de graphisme permettant d'afficher à l'écran du texte, des graphiques, des pictogrammes en superposition ou non d'un contenu visuel. L'interface vidéo 7 est contrôlée par l'unité centrale 3 en association avec un programme exécutable enregistré dans la mémoire 4. Selon un exemple préféré de réalisation, l'ordinateur 1 est équipé d'une interface 8 pour la communication avec un serveur distant via un réseau numérique 9. Cette connexion permet de recevoir notamment des contenus vocaux à des fins de sélection, d'analyse et de reproduction. La communication peut s'effectuer à courte ou longue portée, par exemple avec un réseau local sans fil (Wi-Fi - marque appartenant à Wi-Fi Alliance, ou Bluetooth - marque déposée par Bluetooth SIG, Inc.). Le clavier 6 émet des signaux vers l'interface 5 pour contrôler le fonctionnement de l'ordinateur 1, le volume par exemple. L'ordinateur 1 est également doté d'une mémoire de données 10 pour le stockage des documents vocaux ou audiovisuel.

L'ordinateur 1 comporte une interface audio 11 pour amplifier des signaux analogiques vers au moins une enceinte acoustique 12. Selon un premier mode de réalisation, l'ordinateur 1 comporte un circuit d'interface 13 avec un microphone 14 destiné à capter le son ambiant, et notamment des conversations, du type téléphonique par exemple. Selon un autre mode de réalisation, le réseau 9 transmet des contenus vocaux à l'ordinateur 1, qui les traite selon le procédé objet de l'invention.

Selon un troisième mode de réalisation, les étapes d'enregistrement des documents vocaux ou audiovisuel, et d'analyse du contenu vocal s'effectuent sur un serveur distant, l'utilisateur disposant alors d'un simple terminal pour commander des requêtes et recevoir des résultats.

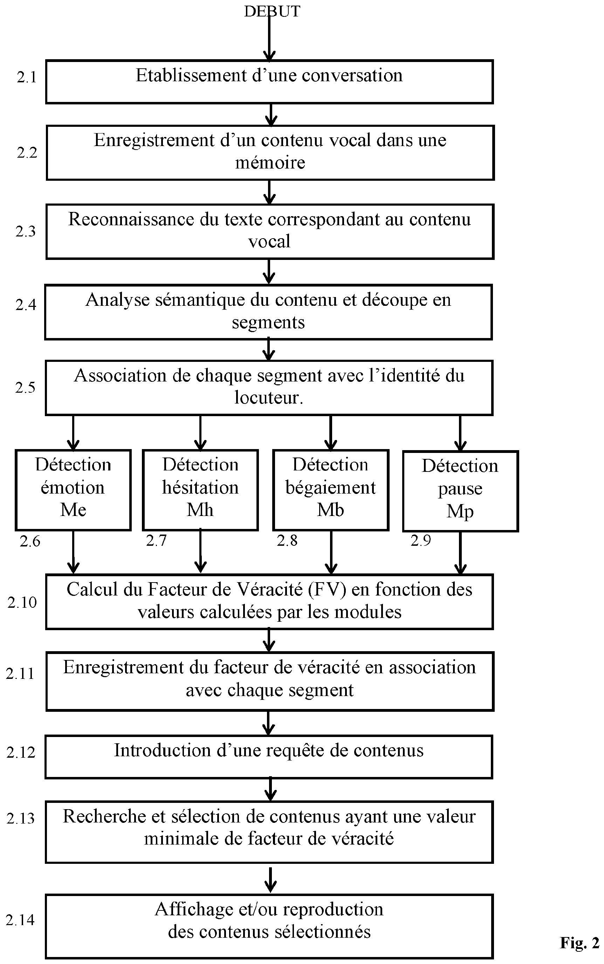

Après avoir détaillé l'équipement nécessaire pour la mise en œuvre du procédé, les principales étapes du procédé vont maintenant être expliquées, à l'aide de l'ordinogramme illustré par la Fig. 2, selon un exemple préféré de réalisation. Ces étapes s'exécutent sur un ordinateur du type de celui représenté à la Fig. 1 et/ou un serveur distant.

A l'étape 2.1, une conversation est établie entre deux interlocuteurs, elle peut s'effectuer par téléphone, ou par un réseau, Internet par exemple, ou lors d'un face à face, le microphone 14 est alors utilisé. Les signaux sonores sont numérisés et l'ensemble des données est enregistré sous la forme d'un contenu vocal (étape 2.2). A l'étape 2.3, le contenu est alors converti en texte par un moteur de reconnaissance textuel qui reconnaît les signaux vocaux et produit le texte correspondant. Le contenu et le texte associé sont ensuite analysés sémantiquement de façon à en extraire des segments, typiquement des phrases, chaque phrase ayant un sens (étape 2.4). De façon facultative, à l'étape 2.5, l'analyseur sémantique détermine l'identité du locuteur et associe chaque segment à une identité, par exemple P1, P2 et P3 lors d'une conversation à trois personnes. Ces cinq premières étapes sont répétées pour chaque conversation et se terminent par l'enregistrement du contenu vocal dans une base de données (étape 2.6). Au fil du temps, des conversations peuvent ainsi être enregistrées et référencées en indiquant la date et l'heure, le mode de communication, le nombre de locuteurs, leurs identités, etc.

Selon l'invention, il est possible de quantifier le degré de véracité des propos prononcés par chaque locuteur. Cette opération consiste à analyser chaque segment d'un contenu vocal par des modules Mi qui fournissent des valeurs représentatives Vi de la présence ou non d'un élément de langage déterminé dans ce segment. Selon un mode particulier de réalisation, quatre modules de détection de quatre éléments de langage dans les segments des contenus vocaux, sont implémentés :

- Module Me qui détecte l'émotion telle que : la joie, la colère, la peur et son intensité. Cet élément de langage est détecté par un modèle prédictif de régression sur la valence émotionnelle et la valeur de l'excitation. La valeur Ve est d'autant plus grande si le module détecte un changement émotionnel brusque.

- Module Mh qui détecte l'hésitation dans les propos d'un locuteur. La valeur Vh est calculée par la détection d'expression d'incertitude à partir d'un thésaurus comprenant les différents verbatim indiquant une hésitation (« peut-être », « je ne suis pas sûre », « il me semble que », etc.). Chacune des expressions est associée à une pondération représentant un niveau d'incertitude déterminé. Les associations sont enregistrées dans un tableau, lorsque le module découvre dans le texte une expression enregistrée, il extrait la pondération associée. La pondération s'exprime en pourcentage et varie de 50% à 99%, 50% signifie que c'est très incertain et 99% signifie une quasi certitude. Un exemple d'un tel tableau est reproduit ci-dessous :

| Expression | Pondération Vh |
| --- | --- |
| « Je ne suis pas sûr » | 58% |
| « Possiblement » | 93% |
| « la valeur est xxx, mais ce n'est vraiment pas sûr » | 50% |

Les expressions associées à des valeur inférieures à 0,5% signifient que l'information associée est plutôt fausse et non pas plus ou moins douteuse. Une telle expression ne peut être prise en compte pour évaluer la véracité d'une information qui peut finalement être vraie. Lorsque plusieurs expressions associées à des valeurs exprimant une hésitation sont détectées dans les propos d'un locuteur, alors le procédé ne prend en compte que la plus grande valeur.

- Module Mb qui détecte le bégaiement dans les propos d'un locuteur. La valeur Vb est calculée à l'aide d'un modèle acoustique entrainé sur un jeu de données ou « dataset » en langage anglo-saxon comprenant un total de 17 heures d'enregistrements audio. Le bégaiement ne rentre en compte pour le calcul du facteur de véracité que lorsqu'il est détecté de manière épisodique et ne représente pas une constante dans l'élocution. En d'autres termes, si le locuteur bégaie constamment, il n'est pas possible d'en déduire quoi que ce soit au niveau de la véracité des propos, et la valeur Vb sera nulle.
- Module Mp qui détecte les pauses de réflexion. La valeur Vp est calculée par le biais d'un modèle utilisant le VAD (Voice Activity Détection, la détection de parole). Le poids de cet élément de langage est faible pour quantifier la véracité du propos car il peut indiquer une pause de réflexion pour donner une réponse précise, comme il peut indiquer une pose d'hésitation pour donner une réponse faussée. Sans une analyse des expressions faciales, ce paramètre a un poids inférieur à 10% dans la décision.

Chaque module s'exécute en parallèle ou séquentiellement au cours des étapes 2.6, 2.7, 2.8, et 2.9. et fournit les quatre valeurs associés Ve, Vh, Vb et Vp. A l'étape 2.10, le Facteur de Véracité (Fv) est calculé en fonction de ces quatre valeurs, associées chacune à un score de confiance qui représente l'importance de ces valeurs dans le calcul de Fv. Selon le mode particulier de réalisation décrit précédemment dans lequel quatre modules de détection de quatre éléments de langage différents sont implémentés, l'équation de calcul de FV est la suivante :

$$Fv = ( \alpha_e\, V_e + \alpha_h\, V_h + \alpha_b\, V_b + \alpha_p\, V_p )/ 4$$

La formule générale lorsque le facteur de véracité est calculé à partir de N modules est la suivante :

$$F_v = \frac{\sum_{i=1}^{N} \alpha_i v_i}{N}$$

Où le score de confiance $\alpha_i$, = $p_i\, \mu_i$ avec $p_i$ est un coefficient de confiance et $\mu_i$ est un paramètre de véracité introduit à la main et calculé empiriquement, par défaut, il est égal à 1. Le coefficient de confiance est calculé par le moteur de reconnaissance vocale et exprime la probabilité pour que le texte correspond bien aux signaux sonores analysés par le moteur, le coefficient de confiance varie donc à chaque mot et expression. Le paramètre de véracité $\mu_i$ qui est initialisé une fois pour toute à une valeur entre 50% et 100% exprime le fait que le module i associé est plus ou moins important pour évaluer la véracité des propos. Si le module n'a pas été évalué, la valeur $\mu_i$, est mise à 1 par défaut. L'expérience montre par exemple qu'un bégaiement est plus représentatif que l'existence d'une pause de réflexion pour représenter un manque de véracité dans des propos exprimés, et donc $\mu_b$ est plus élevé que $\mu_p$.

- Module Mb

Le facteur de véracité est enregistré et associé à chaque segment (étape 2.11). A ce stade, la base de données est composée d'au moins un contenu vocal en format numérique composé d'au moins un segment vocal qui est associé à des données dont le contenu textuel et le facteur de véracité.

A un certain moment et au cours de l'étape 2.12, un utilisateur recherche une information textuelle ayant un certain niveau de véracité, il introduit alors sur le clavier 6 une requête composée de mots clefs, et une valeur minimale de véracité, par exemple 5, dans une échelle de 0 à 9, où 9 représente une information totalement sûre. Un moteur de recherche analyse tous les contenus textuels pour y détecter la présence des mots clefs et filtre les contenus trouvés en rejetant ceux dont le facteur de véracité se situe en-dessous de la valeur minimale introduite (étape 2.13). Les segments retenus après filtrage sont alors reproduits sur l'ordinateur 1, sous forme textuelle et/ou de façon sonore sur les haut-parleurs 12 (étape 2.14).

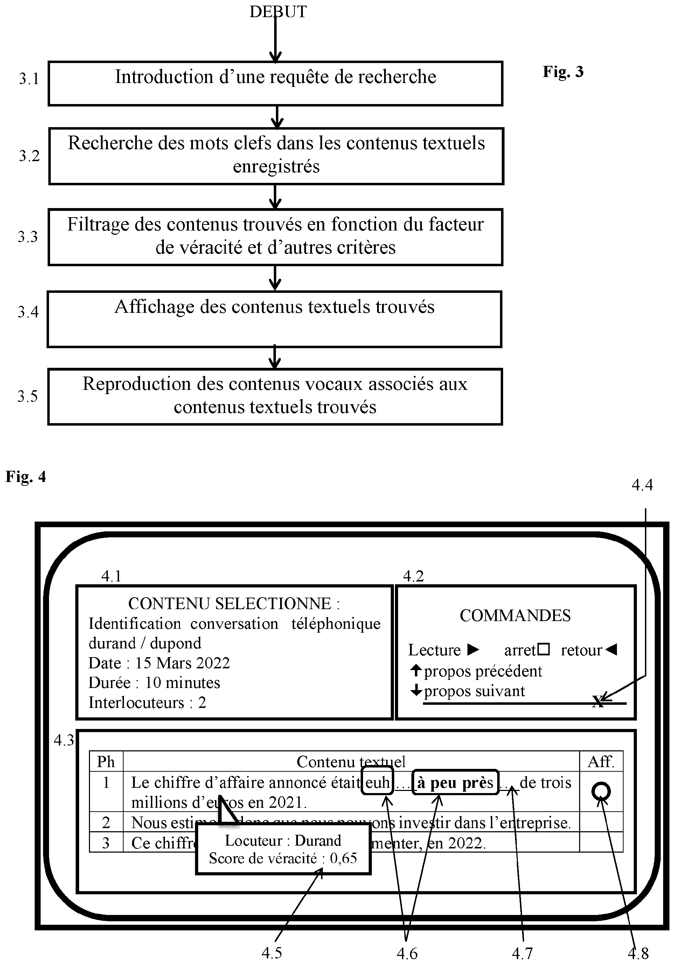

La Fig. 3 décrit un ordinogramme illustrant une première application utilisant le procédé d'analyse de la parole d'un locuteur. Cette application permet de rechercher à l'aide de mots clefs ayant un certain sens, des informations contenues dans des contenus vocaux enregistrés dans la base de données. Cette application comporte typiquement les étapes suivantes selon un mode de réalisation :

A l'étape 3.1, un utilisateur introduit sur le clavier 6 une requête de recherche comportant au moins un mot clef, une valeur minimale du facteur de véracité et éventuellement d'autres données comme l'identité d'un locuteur, une fourchette de temps, un moyen de communication, etc. A l'étape 3.2, un moteur de recherche lit l'ensemble des contenus textuels enregistrés dans la base de données et sélectionne ceux possédant les mots clef introduits à l'étape 3.1. Les contenus textuels sont ensuite filtrés en fonction de la valeur minimale du facteur de véracité, les contenus ayant un facteur de véracité en-dessous de la valeur minimale introduite étant éliminés (étape 3.3). De manière facultative, d'autres critères peuvent être appliqués au filtrage, et notamment : l'identité du locuteur, la fourchette de temps, le moyen de communication, etc. Les contenus vocaux sont ceux possédant un contenu textuel retenu après filtrage. A l'étape 3.4, les résultats sont affichés sur l'écran 2 sous la forme d'une liste d'identifiants de contenus vocaux, accompagnés des données les caractérisant, le temps par exemple, ou le nombre de locuteurs. L'utilisateur peut alors sélectionner l'un des contenus vocaux affichés pour faire apparaître dans une fenêtre de l'écran le texte des propos échangés. Avantageusement, le texte de chaque segment du contenu sélectionné apparaît avec une information représentative de la valeur du facteur de véracité. De cette manière, l'utilisateur peut voir la fiabilité du contenu textuel qui apparaît à l'écran. A l'étape 3.5, l'utilisateur demande la reproduction sonore d'un contenu vocal possédant un contenu textuel retenu après filtrage. L'affichage comporte une ligne temporelle permettant à l'utilisateur de déplacer un curseur pour avancer ou reculer dans la reproduction du contenu vocal.

La Fig. 4 représente un schéma d'une apparence d'écran servant d'interface pour cette première application. Cette apparence comporte plusieurs fenêtres, une première fenêtre 4.1 identifie le contenu vocal d'où les propos sont analysés, en affichant par exemple les noms des locuteurs, la date d'enregistrement du contenu, le nombre de locuteurs, la durée du contenu, etc. Une seconde fenêtre 4.2 affiche les commandes activables par l'utilisateur. Ce dernier peut lancer la lecture en sélectionnant une icone triangulaire pointée vers la droite, peut stopper la lecture en sélectionnant une icone carrée, peut faire repartir la lecture en arrière en sélectionnant une icone triangulaire pointée vers la gauche. Cette fenêtre comporte une ligne horizontale 4.4 doté d'un curseur que l'utilisateur peut déplacer à gauche et à droite pour sélectionner le moment de la lecture dans le contenu. Une troisième fenêtre 4.3 affiche le contenu textuel des propos prononcés par chaque locuteur, des icônes représentant des flèches pointées vers le haut et le bas permettent à l'utilisateur de sélectionner un propos représenté par son contenu textuel. En déplaçant le curseur à l'aide de sa souris, l'utilisateur peut pointer un propos et une fenêtre 4.5 apparaît fugitivement pour afficher l'identité du locuteur et la valeur du facteur de véracité associé à son propos. De cette manière, l'utilisateur peut luimême évaluer la véracité du propos retranscrit en texte, et confirmer ou non que les propos ont été correctement convertis en texte par le moteur de reconnaissance textuel et que les éléments de langage pour le calcul du facteur de véracité sont bien présents. Les éléments de langage utilisés pour le calcul du facteur de véracité peuvent être graphiquement mis en évidence, et la caractéristique graphique qui apparaît à l'écran dépend du module qui les traite. Ainsi, les expressions « euh » et « à peu près » sont détectés par le module Mh est mis en évidence par un encadrement 4.6, les pauses dans les propos sont mis graphiquement en évidence par trois points de suspension 4.7. L'affichage de ces caractéristiques graphiques est commandable par une icône du type ON/OFF 4.8. En voyant l'écran, l'utilisateur peut facilement prendre connaissance du facteur de véracité d'un propos exprimé et connaître les éléments qui contribue à le calculer.

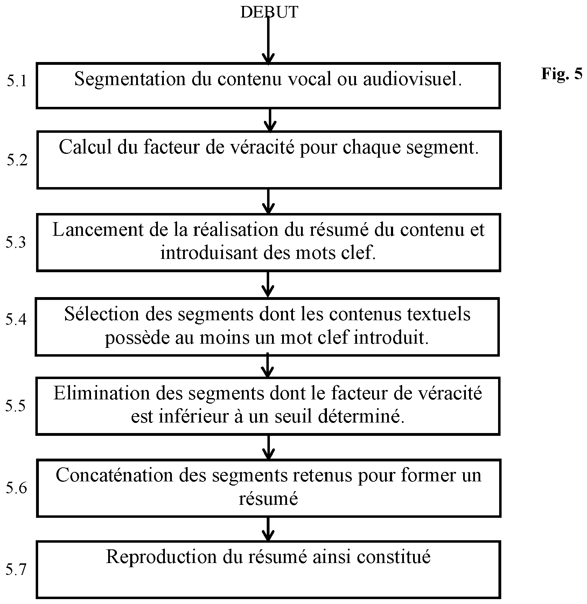

La Fig. 5 décrit un ordinogramme illustrant une seconde application utilisant le procédé d'analyse de la parole d'un locuteur. Cette application permet de produire un résumé d'un contenu vocal enregistré en sélectionnant certaines parties. Ce contenu peut être par exemple un débat télévisé, un reportage, etc, et de façon générale, tout document contenant des paroles ayant un contenu informationnel important. La production du résumé consiste à appliquer un modèle de regroupement (« clustering » en langue anglo-saxonne) sémantique pour identifier les thèmes abordés, puis de produire un résumé par génération de texte basé sur les segments les plus pertinentes, et sémantiquement proches du thème en question obtenu par le calcul de la distance cosinus. Cette distance cosinus correspond au cosinus d'un angle mesuré entre deux vecteurs tracés dans un espace multidimensionnel. Chaque dimension de ces vecteurs étant associés à un thème, si deux vecteurs sont proches, cela signifie que les textes associés à ces vecteurs traitent du même sujet, sur le plan sémantique.

L'introduction du facteur de véracité permet d'augmenter ou de diminuer le score de la distance cosinus donnant ainsi plus ou moins une importance à un passage donné dans le résumé produit.

Dans un premier temps (étape 5.1), le contenu vocal ou audiovisuel est segmenté en plusieurs parties ayant un sens, ces parties peuvent par exemple comprendre une phrase, ou plusieurs phrases prononcées les unes à la suite des autres par le même locuteur. A l'étape 5.2, un calcul du facteur de véracité (FV) est appliqué sur chaque segment en utilisant les modules mis en œuvre dans les étapes 2.6 à 2.9. A un certain moment, une commande utilisateur est introduite (étape 5.3) qui déclenche la production du résumé du contenu vocal ou audiovisuel. L'utilisateur définit dans cette commande des mots clefs qui spécifie le thème du résumé. A l'étape 5.4, l'application sélectionne à partir de son contenu textuel, les segments comportant au moins un de ces mots clefs, une première liste de segments est produite lorsque tout le contenu est analysé. Puis, un filtrage des segments de cette liste est réalisé, les segments retenus sont ceux dont la valeur du facteur de véracité est au moins supérieure à une valeur déterminée (étape 5.5). Cette valeur déterminée peut être inscrite dans l'application ou être introduite par l'utilisateur. A l'étape 5.6, tous les contenus vocaux associés aux segments retenus sont concaténés en les disposant chronologiquement bout à bout pour former le résumé dudit contenu. En introduisant une commande, l'utilisateur lance la reproduction du résumé qui s'affiche sur l'écran sous forme textuel, et/ou est reproduit par les enceintes acoustiques 12 et/ou est visualisé sur l'écran si le contenu est audiovisuel (étape 5.7). L'utilisateur peut donc prendre connaissance des moments les plus fiables du contenu et éventuellement le sélectionne pour le reproduire entièrement.

Bien que la présente invention ait été décrite en référence aux modes de réalisation particuliers illustrés, celle-ci n'est nullement limitée par ces modes de réalisation, mais ne l'est que par les revendications annexées. On notera que des changements ou des modifications pourront être apportés par l'homme du métier.

**Revendications**

1.  Procédé de sélection d'au moins un segment de données textuelles représentant des contenus vocaux enregistrés dans une base de données, comprenant les étapes ci-après mises en œuvre sur un ordinateur (1) : une étape de détermination (2.10) d'une valeur appelée « facteur de véracité » associée à chaque segment et calculée à partir de la présence ou de l'absence d'éléments de langage détectés dans le contenu vocal du segment, ledit facteur étant représentatif de l'état émotionnel du locuteur lors de la locution du contenu vocal, ledit procédé étant **caractérisé en ce qu'**il comporte une étape de sélection (2.13) d'au moins un segment de données, l'au moins un segment sélectionné possédant un facteur de véracité dont la valeur est supérieure à un seuil déterminé.

2.  Procédé de sélection d'au moins un segment de donnée selon la revendication 1, **caractérisé en ce que** le facteur de véracité est calculé en fonction de la présence ou de l'absence dans le segment vocal d'un ou plusieurs éléments de langage pris dans l'ensemble suivant : expressions de langage présentes dans un tableau enregistré en mémoire, bégaiements ou répétition, pauses de réflexion ou hésitation.

3.  Procédé de sélection d'au moins un segment de donnée selon la revendication 1, **caractérisé en ce que** ledit facteur de véracité dépend d'un paramètre calculé par un modèle prédictif de régression sur la valence émotionnelle et la valeur de l'excitation détectée dans le contenu vocal.

4.  Procédé de sélection d'au moins un segment de donnée selon l'une quelconque des revendications précédentes, **caractérisé en ce que** ledit facteur de véracité dépend de la présence d'au moins une expression textuelle extraite d'un tableau de données enregistré en mémoire associant des expressions de langage et des valeurs prédéterminés, ledit paramètre étant calculé à partir des valeurs associées aux expressions détectées dans le contenu vocal.

5.  Procédé de sélection d'au moins un segment de donnée selon l'une quelconque des revendications précédentes, **caractérisé en ce que** ledit facteur de véracité dépend de la présence de bégaiements détectés de façon épisodique dans le contenu vocal.

6.  Procédé de sélection d'au moins un segment de donnée selon l'une quelconque des revendications précédentes, **caractérisé en ce que** ledit facteur de véracité dépend de la présence dans le contenu vocal de pauses de réflexion, déterminées par un modèle utilisant une application de détection de parole.

7.  Procédé de sélection d'au moins un segment de donnée selon l'une quelconque des revendications précédentes, **caractérisé en ce que** ledit facteur de véracité est calculé sur la base d'au moins deux éléments de langage dont l'importance pour la détermination du facteur de véracité est définie par un coefficient déterminé.

8.  Procédé de sélection d'au moins un segment de donnée selon l'une quelconque des revendications précédentes, **caractérisé en ce que** lesdits segments de données contiennent les mots détectés dans le contenu vocal de chaque segment, le procédé comportant une étape préalable d'introduction d'au moins un mot clef et une étape de recherche des mots clefs introduits dans les segments enregistrés, l'étape de sélection d'au moins un segment s'effectuant parmi les segments comportant au moins un mot clef introduit, le procédé comportant en outre une étape de reproduction des contenus vocaux sélectionnés lors de l'étape de sélection.

9.  Procédé de sélection d'au moins un segment de donnée selon l'une quelconque des revendications précédentes, **caractérisé en ce qu'**il comporte une étape d'affichage d'au moins un texte présent dans le contenu vocal associé aux segments sélectionnés et de la valeur du facteur de véracité associé à ce texte.

10. Procédé d'affichage d'un texte présent dans un contenu vocal composé d'une pluralité de segments de donnée et enregistré dans une mémoire (10), **caractérisé en ce qu'**il comporte les étapes ci-après mises en œuvre sur un ordinateur (1) : une étape d'analyse d'un document vocal pour le décomposer en segments de donnée textuelles associés chacun à un contenu vocal (2.5), une étape de détermination (2.10) d'une valeur appelée « facteur de véracité » associée à chaque segment et calculée à partir de la présence ou de l'absence d'éléments de langage détectés dans le contenu vocal du segment, ledit facteur étant représentatif de l'état émotionnel du locuteur lors de la locution du contenu vocal, une étape d'affichage d'un texte présent dans le contenu vocal et une étape de mise en évidence graphique des éléments de ce texte représentatifs des éléments de langage qui sont utilisés pour la détermination du facteur de véracité associé à ce texte.

11. Procédé d'affichage d'un texte selon la revendication 10, **caractérisé en ce qu'**il comporte une étape de détermination des différents locuteurs s'exprimant dans le contenu vocal, et une étape d'introduction d'un identifiant de locuteur, les textes du locuteur sélectionné étant pris en compte dans l'étape d'affichage.

12. Procédé de création d'un résumé d'un document vocal composé d'une pluralité de segments de donnée et enregistré dans une mémoire (10), **caractérisé en ce qu'**il comporte une étape d'analyse dudit document vocal en vue de le décomposer en segments de donnée associé chacun à un contenu vocal, une étape selon la revendication 1 pour sélectionner un ensemble de segments dont le facteur de véracité a une valeur supérieure à un seuil déterminé, une étape de constitution dudit résumé à partir des segments sélectionné mis chronologiquement bout à bout et, une étape d'introduction d'une commande sur ledit ordinateur (1) pour reproduire le résumé ainsi constitué.

Fig. 1

Réseau    9    Ordinateur 1    2

8    7

Interface réseau    Interface vidéo    Ecran

11

4    3    Interface
Haut-
parleur

Mémoire
Program    Unité
Centrale

10

13    Mémoire de
données

Interface
microphone    5    12

Interface
utilisateur

6

Clavier

14

DEBUT

| 2.1 | Etablissement d'une conversation |
|---|---|

| 2.2 | Enregistrement d'un contenu vocal dans une mémoire |
|---|---|

| 2.3 | Reconnaissance du texte correspondant au contenu vocal |
|---|---|

| 2.4 | Analyse sémantique du contenu et découpe en segments |
|---|---|

| 2.5 | Association de chaque segment avec l'identité du locuteur. |
|---|---|

| | Détection émotion Me | Détection hésitation Mh | Détection bégaiement Mb | Détection pause Mp |
|---|---|---|---|---|
| | 2.6 | 2.7 | 2.8 | 2.9 |

| 2.10 | Calcul du Facteur de Véracité (FV) en fonction des valeurs calculées par les modules |
|---|---|

| 2.11 | Enregistrement du facteur de véracité en association avec chaque segment |
|---|---|

| 2.12 | Introduction d'une requête de contenus |
|---|---|

| 2.13 | Recherche et sélection de contenus ayant une valeur minimale de facteur de véracité |
|---|---|

| 2.14 | Affichage et/ou reproduction des contenus sélectionnés |
|---|---|

Fig. 2

DÉBUT

**Fig. 3**

| | |
|---|---|
| 3.1 | Introduction d'une requête de recherche |
| 3.2 | Recherche des mots clefs dans les contenus textuels enregistrés |
| 3.3 | Filtrage des contenus trouvés en fonction du facteur de véracité et d'autres critères |
| 3.4 | Affichage des contenus textuels trouvés |
| 3.5 | Reproduction des contenus vocaux associés aux contenus textuels trouvés |

**Fig. 4**

4.4

4.1

CONTENU SELECTIONNE :
Identification conversation téléphonique durand / dupond
Date : 15 Mars 2022
Durée : 10 minutes
Interlocuteurs : 2

4.2

COMMANDES

Lecture ▶     arret☐   retour◀
↑ propos précédent
↓ propos suivant

4.3

| Ph | Contenu textuel | Aff. |
|---|---|---|
| 1 | Le chiffre d'affaire annoncé était euh … à peu près de trois millions d'euros en 2021. | ○ |
| 2 | Nous estimons donc que nous pourrons investir dans l'entreprise. | |
| 3 | Ce chiffre va augmenter, en 2022. | |

Locuteur : Durand
Score de véracité : 0,65

4.5     4.6     4.7     4.8

DEBUT

**Fig. 5**

5.1 | Segmentation du contenu vocal ou audiovisuel.

5.2 | Calcul du facteur de véracité pour chaque segment.

5.3 | Lancement de la réalisation du résumé du contenu et introduisant des mots clef.

5.4 | Sélection des segments dont les contenus textuels possède au moins un mot clef introduit.

5.5 | Elimination des segments dont le facteur de véracité est inférieur à un seuil déterminé.

5.6 | Concaténation des segments retenus pour former un résumé

5.7 | Reproduction du résumé ainsi constitué

Europäisches
Patentamt

European
Patent Office

Office européen
des brevets

**RAPPORT DE RECHERCHE EUROPEENNE**

Numéro de la demande

**EP 22 21 3655**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2012/262296 A1 (BEZAR DAVID [US]) 18 octobre 2012 (2012-10-18) * abrégé * * alinéa [0013] * * alinéa [0045] - alinéa [0072] * * figures 1,2,4,5,6 * * alinéa [0079] - alinéa [0127] * ----- | 1-12 | INV. G10L17/26 G10L25/63 |
| A | MISHRA AMIT ET AL: "Real time emotion detection from speech using Raspberry Pi 3", 2017 INTERNATIONAL CONFERENCE ON WIRELESS COMMUNICATIONS, SIGNAL PROCESSING AND NETWORKING (WISPNET), IEEE, 22 mars 2017 (2017-03-22), pages 2300-2303, XP033324408, DOI: 10.1109/WISPNET.2017.8300170 * le document en entier * ----- | 1-12 | |
| A | WO 2011/139687 A1 (STEVENS INST TECHNOLOGY [US]; CHANDRAMOULI RAJARATHNAM [US] ET AL.) 10 novembre 2011 (2011-11-10) * figure 1 * * p. 20, deuxième paragraphe; page 20 * * p. 180, cinquième paragraphe * ----- | 1-12 | DOMAINES TECHNIQUES RECHERCHES (IPC) G10L |
| A | NIKOLAOS TSINGANOS ET AL: "Towards an Automated Recognition System for Chat-based Social Engineering Attacks in Enterprise Environments", AVAILABILITY, RELIABILITY AND SECURITY, ACM, 2 PENN PLAZA, SUITE 701NEW YORKNY10121-0701USA, 27 août 2018 (2018-08-27), pages 1-10, XP058414621, DOI: 10.1145/3230833.3233277 ISBN: 978-1-4503-6448-5 * abrégé * ----- | 1-12 | |

Le présent rapport a été établi pour toutes les revendications

| Lieu de la recherche | Date d'achèvement de la recherche | Examinateur |
|---|---|---|
| La Haye | 27 mars 2023 | De Ceulaer, Bart |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................
& : membre de la même famille, document correspondant

EPO FORM 1503 03.82 (P04C02)

# EP 4 198 971 A1

## ANNEXE AU RAPPORT DE RECHERCHE EUROPEENNE
## RELATIF A LA DEMANDE DE BREVET EUROPEEN NO.

EP 22 21 3655

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-03-2023

| Document brevet cité au rapport de recherche | Date de publication | Membre(s) de la famille de brevet(s) | Date de publication |
|---|---|---|---|
| US 2012262296 A1 | 18-10-2012 | US 2012262296 A1<br>US 2015170638 A1 | 18-10-2012<br>18-06-2015 |
| WO 2011139687 A1 | 10-11-2011 | GB 2493875 A<br>US 2013138428 A1<br>WO 2011139687 A1 | 20-02-2013<br>30-05-2013<br>10-11-2011 |

EPO FORM P0460

Pour tout renseignement concernant cette annexe : voir Journal Officiel de l'Office européen des brevets, No.12/82

**EP 4 198 971 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2015142446 A